## Europäisches Patentamt
## European Patent Office
## Office européen des brevets

(19)

(11) Veröffentlichungsnummer: **0 064 732**
**A1**

# EUROPÄISCHE PATENTANMELDUNG

(12)

(21) Anmeldenummer: 82103962.5

(22) Anmeldetag: 07.05.82

(51) Int. Cl.³: **A 23 K 3/03**

(30) Priorität: 13.05.81 DE 3118918

(43) Veröffentlichungstag der Anmeldung:
17.11.82 Patentblatt 82/46

(84) Benannte Vertragsstaaten:
AT BE CH DE FR GB IT LI LU NL SE

(71) Anmelder: Plate Bonn Gesellschaft mit beschränkter
Haftung
Siemensstrasse 21
D-5300 Bonn(DE)

(72) Erfinder: Beck, Theodor, Dr., Dipl.-Biologe
Belgradstrasse 142
D-8000 München 40(DE)

(72) Erfinder: Gross, Friedrich, Dr., Dipl.-Landwirt
Prof.-Zorn-Strasse 8
D-8011 Grub(DE)

(74) Vertreter: Türk, Dietmar, Dr. rer. nat.
Redies, Redies, Türk & Gille, Patentanwälte
Brucknerstrasse 20
D-4000 Düsseldorf 13(DE)

(54) Silierhilfsmittel, dessen Verwendung und Verfahren zur Verbesserung der Gärung.

(57) Silierhilfsmittel zur Verbesserung der Gärung und zur Verhinderung von aeroben Abbauvorgängen im Gärfutter mit hohem Trockensubstanzgehalt, enthaltend auf 20 bis 200 Gewichtsteile Benzoesäure oder deren Salze 20 bis 200 Gewichtsteile Formaldehyd-abspaltende Verbindungen und 200 bis 2000 Gewichtsteile Salze der schwefeligen Säure, sowie die Verwendung des Siliermittels zum silieren von Futter mit hohem Trockensubstanzgehalt.

Kulturversuch zur Entwicklungshemmung von Silage – hefen und Schimmelpilzen aus Gärheu bei Anwesenheit der Konservierungsstoffe Na-disulfit (SO₂), Na-Benzoat und Hexamethylentetramin (HMT) in Abhängigkeit von der Reaktion und Konzentration.

FIG.1  Hemmung von Hefen

FIG.2  Hemmung von Schimmelpilzen

EP 0 064 732 A1

Anmelder: Plate Bonn GmbH

5300 Bonn

Siemensstr. 21

Silierhilfsmittel, dessen Verwendung und Verfahren zur Verbesserung der Gärung
_____

Die vorliegende Erfindung betrifft ein Silierhilfsmittel, enthaltend Benzoesäure oder deren Salze, und Formaldehyd-abspaltende Verbindungen, zur Verbesserung der Gärung und zur Verhinderung von aeroben Abbauvorgängen im Gärfutter mit hohem Trockensubstanzgehalt. Weiterhin betrifft die Erfindung ein Verfahren zur Verbesserung der Gärung und zur Verhinderung von aeroben Abbauvorgängen im Gärfutter mit hohem Trockensubstanzgehalt durch Zusatz eines Silierhilfsmittels enthaltend Benzoesäure oder deren Salze und Formaldehyd-abspaltende Verbindungen.

Die Erfindung betrifft auch die Verwendung des Siliermittels zum Silieren von Futter.

Es ist bekannt, daß bei Verwendung von Futterpflanzen mit höherem Trockensubstanzgehalt z. B. über 35 % TS während der Einsäuerung die Verluste durch Fehlgärungen im allgemeinen wesentlich niedriger sind als in Feuchtsilagen. In letzter Zeit häufen sich jedoch die Beobachtungen, daß sogenannte "Halbheu- bzw. Gärheusilage" - Gärfutter mit höheren Trockensubstanzgehalten vorzugsweise mit TS-Gehalten zwischen 35 - 70 % -, an den der Luft zugänglichen Stellen entweder im Gärfutterbehälter oder nach der Auslagerung einem mikorbiellen Verderb unterliegen. Zu den primären Verderberregern zählen in erster Linie Silagehefen mit fakultativ aeroben Eigenschaften, aber auch eine Reihe von Schimmelpilzen.

Derartiges Gärfutter ist einem, mit Erwärmungen einhergehenden, stärkeren Substanzabbau unterworfen. Bei der Futteraufnahme treten Verdauungsschwirigkeiten auf, und es ist
eine Gefährdung durch pilzliche Toxinbildung (z. B. Aflatoxine) nicht auszuschließen.

Eine wirksame Unterdrückung dieser mikrobiellen Verderbprozesse durch die bisher entwickelten Silierhilfsmittel
ist nicht möglich, da deren Einsatz von ihrer Funktionsweise
her auf andere Zielgruppen von problembehafteten Gärfutterarten ausgerichtet ist, die sich wie folgt charakterisieren
lassen:

a) Förderung der Milchsäuregärung bzw. Lenkung der Gärung
   durch Unterdrückung von Fehlgärungen in der anaeroben
   Phase bei der Einsäuerung von schwer silierbaren Futterpflanzen (eiweißreiches Grünfutter, verregnetes Futter,
   Futter mit hohem Wassergehalt)

b) Verhinderung von aeroben, ausschließlich durch Kahmhauthefen induzierten Nachgärvorgängen in sehr saurem,
   kohlehydratreichem Gärfutter wie Mais- und Zuckerrübensilagen.

   Zu diesem Zweck werden bisher entweder organische Säuren
   wie Propionsäure und Ameisensäure oder Kombinationen von
   selektiv bakteriostatisch wirksamen Konservierungsstoffe
   verwandt, deren spezifische Wirkung fast ausschließlich
   in stark saurem Milieu liegt.

Bekannte, streufähige Siliermittel, die eine Lenkung der
anaeroben Gärvorgänge im Futterstock bewirken sollen, enthalten ein Gemisch von Natriumnitrit und Formaldehyd-abspaltenden Verbindungen, insbesondere Hexamethylentetramin (HMT)
(vergleiche DE-PS 1 692 440) oder zusätzlich zu den vorge-

../3

nannten Wirkstoffen Benzoesäure oder deren Salze (DE-OS
2 335 253).

Es sind auch Nitrit-freie Mittel bekannt, die Formaldehyd-
abspaltende Verbindungen und Formiate enthalten (DE-OS
2 602 626).

Zur Verhinderung von aeroben Nachgärvorgängen bei den sehr
sauren Maissilagen ist nach dem Stand der Technik ein Siliermittel enthaltend Benzoesäure oder deren Salze, Formiate
und Salze der schwefeligen Säure bekannt (DE-OS 2 507 067).
Die anzuwendende Sulfitkonzentration sollte bei sauerer und
stark sauerer Konzentration des Gärfutters möglichst gering
gehalten werden, zweckmäßig unter etwa 750 ppm, um die natürliche Milchsäurebildung nicht zu hemmen.

Stärker angewelktes Futter bzw. Halbheu besitzt jedoch
selbst nach eingetretener Gärung eine nur schwach saure
Reaktion. Daneben bewirkt der niedrige Wassergehalt einen
starken Anstieg des osmotischen Wertes im Futter, so daß
nur osmotolerante Mikroben wie besonders bestimmte Schimmelpilze als Verderberreger Entwicklungsmöglichkeiten finden.

Der vorliegenden Erfindung liegt daher die Aufgabe zugrunde
ein Silierhilfsmittel zu finden, das besonders bei stark
angewelktem Gärfutter oder sonstigem Gärfutter mit hohem
Trockensubstanzgehalt die mikrobiellen Verderbvorgänge verhindert und möglichst weitgehend die folgenden Eigenschaften
besitzt:

a) im neutralen bis schwach sauren Reaktionsbereich eine
   ausreichend selektiv fungistatische Wirkung gegenüber osmotoleranten Pilzen und Hefen besitzt

b) im anzuwendenden Konzentrationsbereich bei Gärfutter mit geringem Wassergehalt und nur schwach saurer Reaktion keine wesentliche Wachstumshemmung bei Milchsäurebakterien hervorruft,

c) dessen Einzelkomponenten untereinander bei Kombination eine Steigerung (synergistische Wirkung) der selektiv fungistatischen Wirkungen ergeben,

d) kein oder nur ein langsamer Abbau bzw. Inaktivierung aller oder nur einzelner Komponenten von Wirkstoffen während der jeweiligen Gärphasen eintritt,

e) keine toxischen oder sonstigen ernährungsphysiologischen Nebenerscheinungen von Rückständen bei der Verfütterung auftreten,

f) dessen Komponenten leicht wasserlöslich sind und in gelöster Form dem Futter zum Zweck einer guten Verteilung zugesetzt werden können.

Gegenstand der vorliegenden Erfindung ist demgemäß ein Silierhilfsmittel, enthaltend Benzoesäure oder deren Salze, und Formaldehyd-abspaltende Verbindungen, zur Verbesserung der Gärung und zur Verhinderung von aeroben Abbauvorgängen im Gärfutter mit hohem Trockensubstanzgehalt, das dadurch gekennzeichnet ist, daß es auf 20 bis 200 Gewichtsteile Benzoesäure oder deren Salze 20 bis 200 Gewichtsteile Formaldehyd-abspaltende Verbindungen und 200 bis 2000 Gewichtsteile Salze der schwefeligen Säure enthält.

Weiterhin ist Gegenstand der Erfindung ein Verfahren zur Verbesserung der Gärung und zur Verhinderung von aeroben Abbauvorgängen im Gärfutter mit hohem Trockensubstanzgehalt durch Zusatz eines Silierhilfsmittels enthaltend Benzoesäure oder deren Salze und Formaldehyd-abspaltende Verbindungen, dadurch gekennzeichnet, daß das Siliermittel zusätzlich Salze der schwefeligen Säure enthält und es in ei-

**0064732**

ner solchen Menge zum einzusilierenden Futter gegeben wird, daß, bezogen auf das Futter, die Benzoesäure oder deren Salze in einer Menge von 20 bis 200 ppm, die Formaldehyd-abspaltenden Verbindungen in einer Menge von 20 bis 200 ppm und die Salze der schwefeligen Säure in einer Menge von 200 bis 2000 ppm vorliegen.

Weiterhin ist Gegenstand der Erfindung die Verwendung des erfindungsgemäßen Silierungsmittels zum Silieren von Futter mit hohem Trockensubstanzgehalt, in einer solchen Menge, daß, bezogen auf das Futter, die Benzoesäure oder deren Salze in einer Menge von 20 bis 200 ppm, die Formaldehyd-abspaltenden Verbindungen in einer Menge von 20 bis 200 ppm und die Salze der schwefeligen Säure in einer Menge von 200 bis 2000 ppm vorliegen.

Bevorzugt werden die genannten Verbindungen in Form von leicht wasserlöslichen Salzen eingesetzt. Zweckmäßig wird das Silierhilfsmittel als wäßrige Lösung verwendet, die auf das Futter aufgesprüht wird. Besonders vorteilhafte Eigenschaften hat das Silierhilfsmittel gemäß der Erfindung bei Futter mit einem hohen Trockensubstanzgehalt über 35 Gewichtsprozent.

Als Salze der Benzoesäure sind besonders bevorzugt Alkalisalze, aus wirtschaftlichen Gründen und wegen der guten Wasserlöslichkeit insbesondere Natriumbenzoat. Von den Formaldehyd-abspaltenden Verbindungen ist, wie gemäß dem Stand der Technik, das Hexamethylentetramin (HMT) bevorzugt. Als Salze der schwefeligen Säure sind die Alkalisalze bevorzugt aus den gleichen Gründen wie bei der Benzoesäure. Besonders bevorzugt sind Hydrogensalze, wie Natriumdisulfit.

Die Konzentration von Natriumdisulfit beträgt vorzugsweise mindestens 1000 ppm. Die Gesamtkonzentration der Wirkstoffe gemäß der Erfindung beträgt zweckmäßig 0,2 bis 1 Gewichtsprozent. (Die ppm-Angaben beziehen sich auf das Gewicht des einzusilierenden Futters.)

Das Silierhilfsmittel gemäß der Erfindung kann noch übliche Trägerstoffe enthalten, wobei wasserlösliche Trägerstoffe, insbesondere Kochsalz (aus wirtschaftlichen Gründen) bevorzugt sind.

Als Belege für die angegebenen Eigenschaften bzw. Wirkungsweisen des erfindungsgemäßen Verfahrens zur Einsäuerung und Haltbarmachung von Futterpflanzen mit hohem Trockensubstanzgehalt werden die Ergebnisse entsprechender Untersuchungen im Labor-Modellversuch und im Praxisversuch aufgeführt.

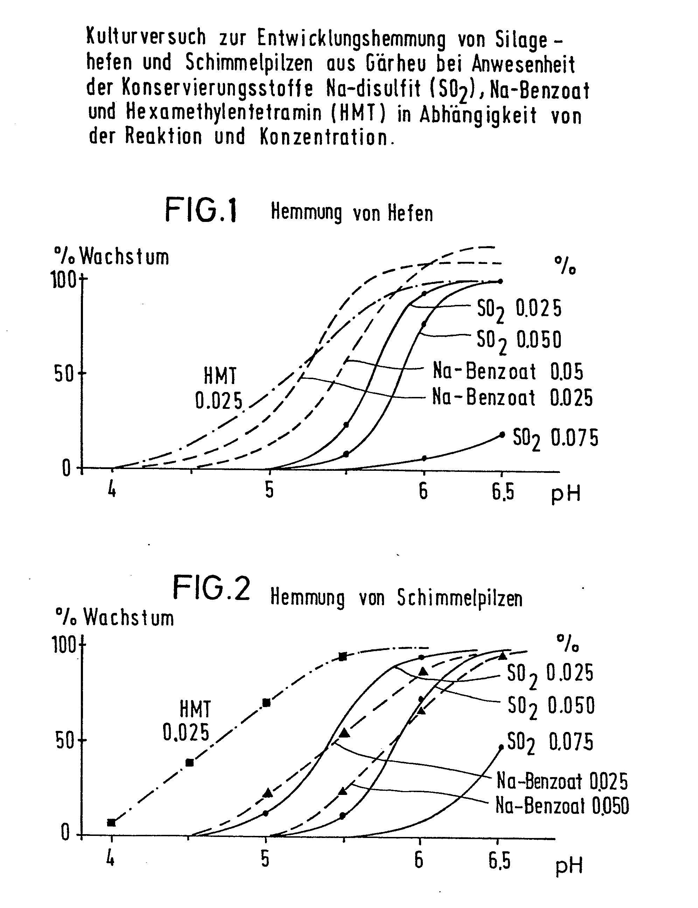

Zu a bis c) Aus den in Fig. 1, Fig. 2 und Tabelle 1 aufgeführten Daten ergibt sich, daß vorzugsweise Na-disulfit in einer solchen Konzentration die erwünschten fungiziden Eigenschaften in schwach saurem Bereich besitzt, die heterofermentative MS-Bakterien wie L. buchneri erst schwach und homofermentative MS-Bakterien wie L. plantarum nur sehr schwach hemmt. Benzoate und HMT haben in einer Konzentration von 0.025 - 0.05 % ebenfalls eine schwächere fungizide Wirkung im schwach sauren Bereich, aber eine gute Wirkung im mittleren Reaktionsbereich, ohne MS-Bakterien in ihrer Entwicklung zu hemmen.

In vergleichenden Silierversuchen unter Laborbedingungen zeigte sich, daß die selektiv fungistatische Wirkung von Silagen mit hohem Trockensubstanzgehalt bei Anwendung variabler Anteile der in Tabelle 1 aufgeführten Wirkstoffe besonders bei höheren Anteilen von Na-disulfit (50 % und mehr) deutlich ansteigt. Die in der Tabelle unter Nr. 3 - 5 sowie Nr. 5 + 2, Nr. 5 + 7 und Nr. 5 + 2 + 7 aufgeführten Werte lassen erkennen, daß damit gleichzeitig eine nur geringe, vernachlässigbare Hemmung des Wachstums von Milchsäurebakterien verbunden ist.

- 7 -

Die Wirkstoffkombination gemäß Erfindung (Nr. 5 + 2 + 7) hat selektiv fungizide Eigenschaften im schwach sauren Milieu und bei Vorliegen hoher Trockensubstanzgehalte.

Tabelle 1:

Einfluß von Konservierungsstoffen auf das Wachstum von Milchsäurebakterien im schwach sauren Milieu

| Konservierungsstoffe in Nährlösung pH 6.0 | | Wachstum von Milchsäurebakterien (ohne Zusatz = 100) | |
|---|---|---|---|
| Nr. | Konz.% | Lactobac.plant. (homofermentativ) | Lactobac. buchneri (heterofermentativ) |
| 1 Na-Benzoat | 0,025 | 100 | 100 |
| 2 Na-Benzoat | 0,050 | 100 | 100 |
| 3 Na-disulfit | 0,025 | 100 | 95 |
| 4 Na-disulfit | 0,050 | 90 | 80 |
| 5 Na-disulfit | 0,075 | 85 | 65 |
| 6 Hexamethylen-tetramin | 0,025 | 100 | 95 |
| 7 " | 0,050 | 95 | 90 |
| Nr. 5 + Nr. 2 | | 85 | 65 |
| Nr. 5 + Nr. 7 | | 90 | 80 |
| Nr. 5 + Nr. 2 (Erfindung) + Nr. 7 | | 85 | 75 |

Die in Tabelle 2 zusammengestellten Ergebnisse aus einem Praxis-Silierversuch unter Verwendung verschiedener Wirkstoffkombinationen zeigen die Übertragbarkeit der im Kulturversuch erhaltenen Resultate auf praktische Verhältnisse.

**Tabelle 2:**

Einfluß von Konservierungsstoff-Kombinationen
auf Verluste, Qualität und Haltbarkeit von Gärfutter aus Kleegras (TS= Trockensubstanz)

| Wirkstoffe | Konzen-tration % | Verluste an TS in % | Eiweißabb. $NH_3/N$ | Flieg-punkte | aerobe Haltbar keit in Tagen ($< 50$ mgO$_2$) |
|---|---|---|---|---|---|
| ohne Zusatz | - | 15,7 | 23.7 | 39.7 | 1 |
| Na-disulfit + Na-Benzoat | 0.12 +0.03 | 9.3 | 13.9 | 84.4 | >6 |
| Na-disulfit + HMT | 0.12 +0.03 | 11.3 | 16.1 | 72.5 | 4 |
| Na-disulfit + Na-Benzoat + HMT (Erfindung) | 0.12 +0.015 +0.015 | 11.2 | 14.3 | 92.7 | >6 |

Die Analysen der Versuchssilagen weisen Erfolg und Wirksamkeit
dieses erfindungsgemäß zusammengesetzten Siliermittels aus. Die
Verluste und der Eiweißabbau wurden durch die erfindungsgemäßen
Zusätze verringert, die Qualität (beurteilt nach Flieg) und die
aerobe Haltbarkeit verbessert. Die in diesem Vergleichsversuch
gefundenen geringen qualitativen Unterschiede bei Anwendung der
aus
zwei oder aus drei Wirkstoffen bestehenden Mischung liegen
innerhalb des Fehlerbereiches der Messungen bzw. sind durch die
Heterogenität des Untersuchungsmaterials bedingt. Die Wahl der
3-Komponenten-Mischung gegenüber der 2-Komponenten-Mischung
bietet jedoch bei verschiedenartigen Futterpflanzen den Vorteil
der größeren Sicherheit, da Hexamethylentetramin nur in der
ersten Gärphase wirksam ist und im weiteren Verlauf zersetzt
wird, Benzoesäure aber nicht abgebaut werden kann und daher auch
spätere fehlerhafte Entwicklungen verhindern kann.

Wie die bisherigen Versuche gezeigt haben, besitzen die aus
DE-OS 25 07 067 bekannten Siliermittelkombinationen zur Verhinderung aerober Verderbvorgänge bei Maissilagen bei Silagen mit
hohem Trockensubstanzgehalt und nur schwach saurer Reaktion,
keine oder nur eine geringe fungizide Wirksamkeit.

Zu d bis e)　Im Stand der Technik lassen sich eine Reihe von Belegen finden, daß $SO_2$-abgebende Verbindungen wie Na-disulfit sich langsam im leicht sauren Bereich zersetzen (E. Weigand 1974, Tierern. 2, 29 - 58) ebenso wie Formaldehyd-abgebende Verbindungen (z.B. HMT) (Th. Beck u. F. Groß 1973, Das wirtschaftseigene Futter 19, 282 - 289), wobei nach abgeschlossener Gärung keine oder höchstens Spuren als Rückstände analytisch nachweisbar sind. Na-Benzoat unterliegt dagegen keinem mikrobiellen Abbau. Eine toxische Wirkung oder ernährungsphysiologische Nebenerscheinungen im angewendeten Konzentrationsbereich können bei Salzen der Benzoesäure ausgeschlossen werden (Marquard 1961, Dt. Lebensm. Rdsch. 57, 1-8).

Zu e bis f)　Die erfindungsgemäße Kombination der genannten Einzelkomponenten ist in jedem Mischungsverhältnis bis zu hohen Konzentrationen (Grenzwert etwa 50 %) leicht wasserlöslich. Damit ist im Gegensatz zu bekannten streufähigen Siliermitteln wie etwa Kombinationen, die nicht oder nur langsam sowie nur teilweise wasserlösliche Salze der Ameisensäure (Formiate) enthalten, nach Applizierung im Futter mit hohem TS-Gehalt (über 35 %) eine rasche und vollständige Löslichkeit der Salze gegeben. Für die praktische Anwendung ist damit der entscheidende Vorteil verbunden, daß das erfindungsgemäße Siliermittel in Wasser gelöst und in flüssiger Form appliziert werden kann. Für die Landwirtschaft ist das von großer Bedeutung, weil damit das Problem der gleichmäßigen Verteilung der Zusätze im Futter mit hohen TS-Gehalten gelöst werden kann. Die Lösung wird mit Hilfe von Pflanzenschutzspritzen auf das am Boden breitflächig liegende Futter aufgesprüht.

Es ist damit eine Vereinfachung und Beschleunigung der Silierarbeit verbunden. Im Gegensatz zu organischen Säuren (z.B. Propionsäure und Ameisensäure) hat die Lösung keinerlei korrosive oder ätzende Eigenschaften. Das Silierhilfsmittel gemäß der Erfindung kann aber auch mit geeigneten Trägerstoffen, z. B. Kochsalz, gemischt werden, wenn es in streufähiger Form eingesetzt werden soll. Kochsalz ist bevorzugt wegen der guten Wasserlöslichkeit und des niedrigen Preises.

Beispiel 1

Beim Einsilieren von 100 cbm Futter, entsprechend 40 t, von stark angewelktem Wiesengras (45 % TS) auf einer Fläche von 5 ha wird auf das breitgestreute Futter mit Hilfe einer Pflanzenschutzspritze 2000 Liter einer wässrigen Lösung von 60 kg einer Mischung bestehend zu 80 % aus Na-disulfit, 10 % Na-Benzoat und 10 % Hexamethylentetramin aufgesprüht.

Beispiel 2

Beim Einsilieren von 200 cbm Futter entsprechend 60 t stark angewelktem Kleegras (55 % TS) in einem Flachsilo werden mit Hilfe eines Dosiergerätes, das auf dem Schlepper montiert ist, mit dem das Futter kontinuierlich festgewalzt wird, 450 Liter einer wässrigen Lösung von 90 kg einer Mischung bestehend aus 60 % Na-disulfit, 20 % Na-Benzoat und 20 % HMT fortlaufend aufgesprüht.

Beispiel 3

Beim Einsilieren von 100 cbm Futter entsprechend 40 t von stark angewelktem Wiesengras in einem Hochsilo werden mit Hilfe eines handelsüblichen Dosiergerätes am Fördergebläse kontinuierlich 0,3 % = 120 kg einer Mischung bestehend aus 50 %

**0064732**

Kochsalz, 40 % Na-disulfit, 5 % Na-Benzoat und 5 % HMT zugesetzt.

Anmelder: Plate Bonn GmbH

      5300 Bonn

      Siemensstr. 21

## Patentansprüche

1. Silierhilfsmittel, enthaltend Benzoesäure oder deren Salze, und Formaldehyd-abspaltende Verbindungen, zur Verbesserung der Gärung und zur Verhinderung von aeroben Abbauvorgängen im Gärfutter mit hohem Trockensubstanzgehalt, **d a d u r c h   g e k e n n z e i c h n e t ,** daß es auf 20 bis 200 Gewichtsteile Benzoesäure oder deren Salze 20 bis 200 Gewichtsteile Formaldehyd-abspaltende Verbindungen und 200 bis 2000 Gewichtsteile Salze der schwefeligen Säure enthält.

2. Silierhilfsmittel nach Anspruch 1, dadurch gekennzeichnet, daß es die Verbindungen in Form von leicht wasserlöslichen Salzen enthält.

3. Silierhilfsmittel nach Anspruch 1 oder 2, dadurch gekennzeichnet, daß es eine wässrige Lösung ist.

4. Verfahren zur Verbesserung der Gärung und zur Verhinderung von aeroben Abbauvorgängen im Gärfutter mit hohem Trockensubstanzgehalt durch Zusatz eines Silierhilfsmittels enthaltend Benzoesäure oder deren Salze und Formaldehyd-abspaltende Verbindungen, dadurch gekennzeichnet, daß das Siliermittel zusätzlich Salze der schwefeligen Säure enthält und es in einer solchen Menge zum einzusilierenden Futter gegeben wird, daß, bezogen auf das Futter, die Benzoesäure oder deren Salze in einer Menge von 20 bis 200 ppm, die Formaldehyd-abspaltenden Verbindungen
in einer Menge von 20 bis 200 ppm und die Salze der
schwefeligen Säure in einer Menge von 200 bis 2000 ppm
vorliegen.

5. Verfahren nach Anspruch 4, dadurch gekennzeichnet,
daß das Siliermittel die Verbindungen in Form von
leicht wasserlöslichen Salzen enthält.

6. Verfahren nach Anspruch 4 oder 5, dadurch gekennzeichnet, daß das Siliermittel in Form einer wäßrigen
Lösung der Bestandteile auf das Futter aufgesprüht
wird.

7. Verfahren nach einem oder mehreren der Ansprüche 4 bis
6, dadurch gekennzeichnet, daß das Futter einen
Trockensubstanzgehalt von über 35 Gewichtsprozent hat.

8. Verwendung des Siliermittels gemäß Anspruch 1 bis 3
zum Silieren von Futter mit hohem Trockensubstanzgehalt, in einer solchen Menge, daß, bezogen auf das
Futter, die Benzoesäure oder deren Salze in einer
Menge von 20 bis 200 ppm, die Formaldehyd-abspaltenden Verbindungen in einer Menge von 20 bis 200 ppm
und die Salze der schwefeligen Säure in einer Menge
von 200 bis 2000 ppm vorliegen.

Kulturversuch zur Entwicklungshemmung von Silage –
hefen und Schimmelpilzen aus Gärheu bei Anwesenheit
der Konservierungsstoffe Na-disulfit ($SO_2$), Na-Benzoat
und Hexamethylentetramin (HMT) in Abhängigkeit von
der Reaktion und Konzentration.

**FIG.1**    Hemmung von Hefen

% Wachstum

SO₂ 0.025
SO₂ 0.050
Na-Benzoat 0.05
Na-Benzoat 0.025
SO₂ 0.075
HMT 0.025

**FIG.2**    Hemmung von Schimmelpilzen

% Wachstum

SO₂ 0.025
SO₂ 0.050
SO₂ 0.075
Na-Benzoat 0.025
Na-Benzoat 0.050
HMT 0.025

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DD - A - 117 171 (L. SCHMIDT et al.) <br> * Ansprüche 1, 6 * <br> -- | 1 |
| D,X | DE - A1 - 2 507 067 (PLATE KOFASIL GMBH) <br> * Ansprüche 1, 3; Seite 1, letzter Absatz * <br> & FR - A1 - 2 301 181 <br> -- | 1 |
| Y | DE - A1 - 2 849 902 (INTERNATIONAL STOCK FOOD CORP.) <br> * Anspruch 1 * <br> & GB - A - 2 008 380 <br> -- | 1 |
| D,Y | DE - A1 - 2 335 253 (PLATE BONN GMBH) <br> * Ansprüche 1 bis 6 * <br> & US - A - 4 088 789 <br> & FR - A1 - 2 236 420 <br> -- | 1 |
| D,A | DE - A1 - 2 602 626 (PLATE KOFASIL GMBH) <br> & FR - A1 - 2 338 654 <br> ---- | |

**KLASSIFIKATION DER ANMELDUNG (Int Cl )**

A 23 K 3/03

**RECHERCHIERTE SACHGEBIETE (Int Cl )**

A 23 K 3/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsatze
E: älteres Patentdokument, das jedoch erst am oder nach dem Anmeldedatum veröffentlicht worden ist
D: in der Anmeldung angeführtes Dokument
L: aus andern Grunden angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 24-06-1982 | SCHULTZE |

EPA form 1503.1   06.78